# EUROPÄISCHE PATENTSCHRIFT

(11) **EP 4 107 577 B1**
(45) Veröffentlichungstag und Bekanntmachung des Hinweises auf die Patenterteilung: **01.04.2026**
(21) Anmeldenummer: 21706531.7
(22) Anmeldetag: 16.02.2021
(51) Int. Cl.: G02C 5/22

(54) **SCHARNIERTEIL FÜR EIN FEDERSCHARNIER EINER BRILLE, BRILLENELEMENT MIT EINEM SOLCHEN SCHARNIERTEIL, VERFAHREN ZUM ANORDNEN EINES SCHARNIERTEILS IN EINEM BRILLENELEMENT, UND VERFAHREN ZUM HERSTELLEN EINES SCHARNIERTEILS**
HINGE PART FOR A SPRING HINGE ON SPECTACLES, SPECTACLES ELEMENT WITH A HINGE PART OF THIS KIND, METHOD FOR ARRANGING A HINGE PART IN A SPECTACLES ELEMENT, AND METHOD FOR PRODUCING A HINGE PART
PARTIE DE CHARNIÈRE POUR UNE CHARNIÈRE À RESSORT SUR DES LUNETTES, ÉLÉMENT DE LUNETTES DOTÉ D'UNE TELLE PARTIE DE CHARNIÈRE, PROCÉDÉ D'AGENCEMENT D'UNE PARTIE DE CHARNIÈRE DANS UN ÉLÉMENT DE LUNETTES ET PROCÉDÉ DE FABRICATION D'UNE PARTIE DE CHARNIÈRE

(30) Priorität: 18.02.2020 DE 102020202046
(43) Veröffentlichungstag der Anmeldung: 28.12.2022
(73) Patentinhaber: OBE GMBH & CO. KG, 75228 Ispringen (DE)
(72) Erfinder: FIEHN, Jörg, 75239 Eisingen (DE)
(74) Vertreter: Kordel, Mattias
(86) Internationale Anmeldenummer: PCT/EP2021/053791
(87) Internationale Veröffentlichungsnummer: WO 2021/165272

(56) Entgegenhaltungen:
- WO-A1-2011/103949
- DE-A1- 102014 210 515
- DE-A1- 102014 221 379
- IT-A1- TV20 110 083
- US-A1- 2011 185 538

## Beschreibung

Die Erfindung betrifft ein Scharnierteil für ein Federscharnier einer Brille, ein Brillenelement mit einem solchen Scharnierteil, ein Verfahren zum Anordnen eines solchen Scharnierteils in einem Brillenelement, und ein Verfahren zum Herstellen eines solchen Scharnierteils.

Federscharniere für Brillen stehen unter einem erheblichen Preisdruck, insbesondere da kostengünstige Kunststofffassungen, insbesondere im Segment von Sportbrillen, sich zunehmender Beliebtheit erfreuen. Brillenelemente wie Brillenbügel oder Mittelteile von Brillen sind insbesondere mittels Spritzgusstechnik, 3D-Druck oder Rapid Prototyping in Kunststoff sehr kostengünstig herstellbar. Hierdurch entsteht auch die Anforderung, dass ein Federscharnier für eine solche Brille, die durch die genannten Techniken sehr kostengünstig herstellbar ist und aufgrund der bereits vorhandenen Eigenflexibilität der Kunststoffmaterialien eigentlich keines Federscharniers bedarf, nur wenig kosten darf.

Ein Scharnierteil für ein Federscharnier einer Brille weist einen Träger mit einer ersten Stützfläche auf, wobei ein Federelement von dem Träger aufgenommen ist, das mit einem ersten Wirkende an der ersten Stützfläche anliegt. Der Träger weist Verankerungselemente auf, die eingerichtet sind, um den Träger in einem Brillenelement in einer Verankerungsposition zu verankern. Das Scharnierteil weist außerdem ein Bügelteil auf, das in dem Träger relativ zu dem Träger verlagerbar angeordnet ist und eine zweite Stützfläche aufweist, an der das Federelement mit einem zweiten Wirkende anliegt.

Ein solches Scharnierteil ist bezüglich seiner Herstellungskosten verbesserungsfähig. Insbesondere deswegen scheuen sich Brillenhersteller manchmal, derartige Scharnierteile in Kunststofffassungen einzusetzen, um den mit dem Material Kunststoff und insbesondere der Spritzgusstechnik, aber auch 3D-Druck oder Rapid Prototyping, verbundenen Kostenvorteil nicht aus der Hand zu geben. Darüber hinaus sind herkömmliche Scharnierteile bezüglich einer Vorspannung des Federelements nicht oder nur mit großem Aufwand einstellbar. Insbesondere ist die Vorspannung nicht im Gebrauch der fertigen Brille einstellbar. Dies bedeutet insbesondere, dass die Vorspannung des Federelements nicht nachjustiert werden kann, falls sie während einer Gebrauchszeit der Brille abnimmt.

Beispiele für den Stand der Technik sind DE10 2014210515 oder IT TV20110083.

Der Erfindung liegt die Aufgabe zugrunde, ein Scharnierteil für ein Federscharnier einer Brille, ein Brillenelement mit einem solchen Federscharnier, ein Verfahren zum Anordnen eines solchen Scharnierteils in einem Brillenelement und ein Verfahren zum Herstellen eines solchen Scharnierteils zu schaffen, wobei die genannten Nachteile zumindest teilweise verringert, vorzugsweise vermieden sind.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Gemäß einem ersten Aspekt der Erfindung weist das Bügelteil des Scharnierteils einen Anschlag auf, der eingerichtet ist, um in einer Montageposition des Bügelteils an dem Brillenelement anzuschlagen. Der Träger weist eine insbesondere stirnseitige, von dem Bügelteil freigestellte Drängfläche auf, die derart angeordnet ist, dass durch Beaufschlagen der Drängfläche mit einer Kraft die Verankerungsposition des Trägers relativ zu der Montageposition des Bügelteils veränderbar ist. Vorteilhaft kann somit insbesondere zugleich die Vorspannung des Federelements eingestellt werden. Insbesondere kann die Vorspannung des Federelements eingestellt oder verändert werden, indem die Drängfläche mit einer Kraft beaufschlagt wird, wobei die Verankerungsposition relativ zu der Montageposition verändert wird. Somit ist es insbesondere einerseits beim Herstellen des Brillenelements, insbesondere beim Einsetzen des Scharnierteils in das Brillenelement, und andererseits aber auch später im Gebrauch einer das Brillenelement aufweisenden Brille möglich, die Vorspannung des Federelements auf einen vorbestimmten Wert präzise und reproduzierbar einzustellen und/oder bei Bedarf nachzujustieren.

Gemäß der Erfindung ist der Träger des Scharnierteils als Blech-Biege-Teil, aus einem Blech, insbesondere aus einem dünnen Blech, ausgebildet. Insbesondere ist der Träger aus einem insbesondere dünnen Blech herausgearbeitet und in eine Träger-Endform gebogen. Dies stellt eine besonders kostengünstige Ausgestaltung des Trägers dar, sodass auch das Scharnierteil als Ganzes sehr kostengünstig hergestellt sein kann.

Unter einem Blech-Biege-Teil wird hier und im Folgenden insbesondere ein Teil verstanden, das in einer Grundform aus einem Blech, insbesondere einem dünnen Blech, vorzugsweise einem Stahlblech, herausgearbeitet oder herausgelöst und anschließend in eine Endform gebogen ist. Das Herausarbeiten oder Herauslösen erfolgt dabei bevorzugt durch Stanzen, Laserschneiden, Drahtschneiden oder Drahterodieren, oder ein anderes geeignetes blechbearbeitendes Verfahren. Ein Stanzen und Biegen kann insbesondere in einem Folgeverbundwerkzeug durchgeführt werden.

Im Folgenden werden Weiterbildungen und Ausgestaltungen der Erfindung gezeigt.

Dass das Federelement von dem Träger aufgenommen ist, bedeutet insbesondere, dass das Federelement von dem Träger umgriffen oder umschlossen ist. Insbesondere ist das Federelement in dem Träger angeordnet.

Vorzugsweise stützt sich das Federelement mit dem ersten Wirkende an der ersten Stützfläche ab. Unter einem Wirkende des Federelements wird insbesondere ein Bereich des Federelements verstanden, mit dem das Federelement mit einem weiteren Teil in Wirkverbindung ist, und in den Kräfte eingeleitet werden können, insbesondere um das Federelement zu spannen oder zu entlasten. In einer Ausgestaltung kann das Wirkende ein tatsächliches, räumliches Ende des Federelements sein. Dies ist aber nicht zwingend erforderlich. Vielmehr können Kräfte auch in einem nicht-endständigen Bereich des Federelements eingeleitet werden.

Der Träger weist bevorzugt eine Mehrzahl von Verankerungselementen auf. Die Verankerungselemente sind bevorzugt hakenförmig ausgebildet, insbesondere in Form von Widerhaken.

Die Verankerungselemente sind insbesondere eingerichtet, um den Träger in axialer Richtung in dem Brillenelement zu verankern, das heißt insbesondere den Träger gegen Zugkräfte, insbesondere gegen ein Herausziehen aus dem Brillenelement in axialer Richtung, zu sichern. Die Verankerungselemente sind insbesondere eingerichtet, um den Träger in dem Brillenelement zu verankern, wenn dieser axial in eine stirnseitige Aufnahmeaussparung des Brillenelements eingesteckt ist. Die Verankerungselemente verankern dabei den Träger in der stirnseitigen Aufnahmeaussparung und sichern ihn dabei insbesondere gegen ein Herausziehen aus der Aufnahmeaussparung entgegen der Einsteckrichtung.

Unter einer axialen Richtung wird hier insbesondere eine Richtung verstanden, die sich entlang einer Richtung längster Erstreckung des Scharnierteils und/oder in Richtung einer längsten Erstreckung des Brillenelements, in welchem das Scharnierteil bestimmungsgemäß angeordnet ist, erstreckt. Insbesondere ist die axiale Richtung bei bestimmungsgemäßer Anordnung des Scharnierteils an einem Brillenträger einer Brille, die das Brillenelement mit dem Scharnierteil aufweist, eine sagittale Richtung des Brillenträgers. Der Brillenträger ist dabei eine Person, die die Brille trägt. Die sagittale Richtung ist eine Vorne-Hinten-Richtung am Körper des Brillenträgers.

Das Brillenelement ist insbesondere ein Brillenbügel. Es kann sich aber auch um ein Mittelteil einer Brille handeln.

Das Federelement ist bevorzugt als Schraubenfeder ausgebildet.

Das Federelement liegt mit dem ersten Wirkende an der ersten Stützfläche und mit dem zweiten Wirkende an der zweiten Stützfläche insbesondere derart an, dass das Federelement zwischen der ersten Stützfläche und der zweiten Stützfläche gespannt, insbesondere zusammengedrückt wird, wenn das Bügelteil in dem Träger in Richtung einer Annäherung der ersten Stützfläche und der zweiten Stützfläche aneinander verlagert wird. Umgekehrt wird das Federelement entspannt oder entlastet, wenn das Bügelteil in dem Träger derart relativ zu dem Träger verlagert wird, dass sich die erste Stützfläche und die zweite Stützfläche voneinander entfernen.

Die Montageposition ist insbesondere eine Position, in der das Bügelteil an dem Brillenelement anschlägt, wenn das Scharnierteil an dem Brillenelement montiert oder befestigt ist.

Dass die Drängfläche von dem Bügelteil freigestellt ist, bedeutet insbesondere, dass die Drängfläche in der Montageposition zugänglich ist, wobei sie insbesondere nicht durch das Bügelteil verstellt oder verdeckt wird. Insbesondere ist die Drängfläche durch das Bügelteil oder zwischen Teilen des Bügelteils hindurch zugänglich.

Die Verankerungsposition kann insbesondere relativ zu der Montageposition verändert werden, indem die Drängfläche mit einer Normalkraft, das heißt einer senkrecht auf der Drängfläche stehenden Kraft, beaufschlagt wird.

Dass die Verankerungsposition relativ zu der Montageposition verändert wird, bedeutet insbesondere, dass eine Relativlage der Verankerungsposition zu der Montageposition, insbesondere eine Relativanordnung des Trägers relativ zu dem Bügelteil, verändert wird.

Insbesondere kann die Verankerungsposition relativ zu der Montageposition in einem an dem Brillenelement montierten Zustand des Scharnierteils verändert werden, indem die Drängfläche mit der Kraft beaufschlagt wird.

In bevorzugter Ausgestaltung besteht das Scharnierteil aus dem Träger, dem Federelement und dem Bügelteil. Insbesondere weist bevorzugt das Scharnierteil keine weiteren Teile oder Elemente auf. Das Scharnierteil ist somit insgesamt einfach und aus wenigen Teilen aufgebaut und damit besonders kostengünstig.

Der Träger ist vorzugsweise als Blech-Biege-Teil aus einem Stahlblech, vorzugsweise aus einem Edelstahlblech, gebildet.

Gemäß einer Weiterbildung der Erfindung ist vorgesehen, dass das Bügelteil als Blech-Biege-Teil, aus einem Blech, insbesondere aus einem dünnen Blech, ausgebildet ist. Das Bügelteil ist insbesondere aus einem Blech ausgestanzt, lasergeschnitten, drahtgeschnitten oder drahterodiert und dann in eine Bügelteil-Endform gebogen. Auf diese Weise kann das Bügelteil besonders einfach und kostengünstig ausgebildet sein.

Das Bügelteil ist bevorzugt als Blech-Biege-Teil aus einem Stahlblech, insbesondere aus einem Edelstahlblech, gebildet.

Besonders kostengünstig ist das Scharnierteil ausgebildet, wenn sowohl das Bügelteil als auch das Trägerteil als Blech-Biege-Teil ausgebildet sind.

Gemäß einer Weiterbildung der Erfindung ist vorgesehen, dass das Bügelteil das Federelement mit zwei Schenkeln umgreift, wobei an jedem Schenkel der beiden Schenkel jeweils ein Scharnierauge angeordnet ist. Das Bügelteil ist somit zugleich einfach und stabil ausgebildet. Insbesondere ist das Bügelteil als zweilappiges Bügelteil ausgebildet.

Bevorzugt ist das Bügelteil U-förmig ausgebildet, wobei es das Federelement mit den beiden Schenkeln des U umgreift. Dabei ist jeweils ein Scharnierauge an jedem dieser Schenkel des U angeordnet.

Vorzugsweise weist der Anschlag zwei Anschläge auf, wobei jeweils einer der beiden Anschläge an je einem der Scharnieraugen ausgebildet ist. Vorzugsweise ist an jedem Scharnierauge jeweils eine Anschlagfläche ausgebildet, wobei die beiden Anschlagflächen den Anschlag des Bügelteils bilden.

Gemäß einer Weiterbildung der Erfindung ist vorgesehen, dass der Träger und das Bügelteil als Blech-Biege-Teile ausgebildet und in ineinander verschlungener Konfiguration angeordnet sind. Dies stellt eine zugleich stabile und einfach sowie kostengünstig herstellbare Konfiguration des Scharnierteils dar. Insbesondere umschlingt der Träger bevorzugt das Federelement und das Bügelteil. Das Bügelteil umschlingt seinerseits das Federelement und den Träger. Die Umschlingungsrichtungen sind dabei bevorzugt senkrecht zueinander orientiert. Der Träger umschlingt also das Federelement und das Bügelteil entlang einer ersten Umschlingungsrichtung; das Bügelteil umschlingt das Federelement und den Träger entlang einer zweiten Umschlingungsrichtung, und die Umschlingungsrichtungen sind senkrecht zueinander orientiert, das heißt stehen insbesondere lokal senkrecht aufeinander.

Gemäß einer Weiterbildung der Erfindung ist vorgesehen, dass die Verankerungselemente als Sägezahnprofil - insbesondere seitlich - an dem Träger angeordnet sind. Dies stellt eine ebenso effiziente wie einfache und kostengünstig herstellbare Ausgestaltung der Verankerungselemente dar, insbesondere da das Sägezahnprofil beim Herausarbeiten des Trägers mit ausgebildet werden kann. Insbesondere kann der Träger mit dem Sägezahnprofil aus einem Blech ausgestanzt, lasergeschnitten, drahtgeschnitten oder drahterodiert werden. Besonders bevorzugt weist der Träger - insbesondere in der Träger-Endform - eine Bodenplatte und eine Deckplatte auf, wobei sowohl die Bodenplatte als auch die Deckplatte jeweils Verankerungselemente, insbesondere in Form eines Sägezahnprofils, aufweisen. Das Federelement und das Bügelteil sind bevorzugt zwischen der Bodenplatte und der Deckplatte angeordnet.

Vorzugsweise weist der Träger beidseitig Verankerungselemente in Form von Sägezahnprofilen auf. Dies ermöglicht eine besonders effiziente, symmetrische Abstützung des Trägers in dem Brillenelement.

Nicht zur beanspruchten Erfindung gehört ein Federscharnier, welches ein erfindungsgemäßes Scharnierteil oder ein Scharnierteil nach einem der zuvor beschriebenen Ausführungsbeispiele aufweist. In Zusammenhang mit dem Federscharnier verwirklichen sich insbesondere die Vorteile, die bereits in Zusammenhang mit dem Scharnierteil erläutert wurden.

Das Federscharnier weist bevorzugt ein weiteres Scharnierteil auf, das mit dem Scharnierteil gelenkig verbunden ist. Das weitere Scharnierteil ist bevorzugt dreilappig ausgebildet, wobei die beiden Scharnierlappen des Bügelteils zwischen die drei Scharnierlappen des weiteren Scharnierteils eingreifen, wenn das weitere Scharnierteil mit dem Scharnierteil gelenkig verbunden ist. Alternativ ist das weitere Scharnierteil zweilappig ausgebildet, wobei in einem Bauraum zwischen den beiden Scharnierlappen des Bügelteils, welcher im vorgenannten Fall durch einen Mittellappen des dreilappigen weiteren Scharnierteils gefüllt wird, bei dem zweilappigen weiteren Scharnierteil ein Freiraum bleibt. Die Herstellung dieser Bauform beinhaltet statt zwei schmaler Schlitze einen breiten Schacht zwischen den Scharnierlappen des weiteren Scharnierteils.

Die Aufgabe wird auch gelöst, indem ein Brillenelement mit einem Scharnierteil geschaffen wird, wobei das Brillenelement eine zu einer Stirnseite hin offene Aufnahmeaussparung aufweist, und wobei in der Aufnahmeaussparung als das Scharnierteil ein erfindungsgemäßes Scharnierteil oder ein Scharnierteil nach einem der zuvor beschriebenen Ausführungsbeispiele angeordnet ist. Der Träger des Scharnierteils ist mit den Verankerungselementen in der Aufnahmeaussparung verankert.

Das Bügelteil liegt bevorzugt mit dem Anschlag an der Stirnseite an, und die Drängfläche des Trägers ist über die Stirnseite, insbesondere über die stirnseitige Öffnung der Aufnahmeaussparung zugänglich. Auf diese Weise ist es möglich, die Drängfläche im montierten Zustand des Scharnierteils an dem Brillenelement mit einer Kraft zu beaufschlagen, um den Träger mit seinen Verankerungselementen weiter in die Aufnahmeaussparung hineinzudrängen, während zugleich das Bügelteil durch den Anschlag ortsfest an der Stirnseite des Brillenelements gehalten wird. Die Verankerungselemente sorgen dafür, dass der Träger von der einmal erreichten Position innerhalb der Aufnahmeaussparung nicht mehr in Richtung der stirnseitigen Öffnung zurückverlagert werden kann. Somit kann durch das Kraft-Beaufschlagen der Drängfläche der Abstand zwischen der ersten Stützfläche und der zweiten Stützfläche verringert und damit die Vorspannung des Federelements eingestellt, insbesondere erhöht werden. Insbesondere kann die Vorspannung des Federelements so auf einen vorbestimmten Wert eingestellt, oder aber auch im Gebrauch des Brillenelements, insbesondere an der fertigen Brille, nachjustiert werden. Insbesondere kann die Vorspannung des Federelements wieder erhöht werden, wenn sie aufgrund von Verschleiß beim Gebrauch der Brille nachgelassen hat. In Zusammenhang mit dem Brillenelement verwirklichen sich insbesondere die Vorteile, die bereits im Zusammenhang mit dem Scharnierteil erläutert wurden.

Die Aufnahmeaussparung erstreckt sich innerhalb des Brillenelements insbesondere in axialer Richtung, insbesondere in sagittaler Richtung eines Brillenträgers bei bestimmungsgemäßer Anordnung einer das Brillenelement aufweisenden Brille an dem Brillenträger.

Die Aufnahmeaussparung ist vorzugsweise - bis auf die stirnseitige Öffnung - allseitig umschlossen. Insbesondere kann das Scharnierteil nur von der Stirnseite her in die Aufnahmeaussparung eingebracht, insbesondere eingeführt oder eingeschoben, insbesondere eingepresst werden.

Die Drängfläche ist insbesondere zwischen den Scharnieraugen des bevorzugt U-förmigen Bügelteils zugänglich; es ist also möglich, insbesondere mit einem geeigneten Werkzeug zwischen die Scharnieraugen des bevorzugt U-förmigen Bügelteils zu greifen und so die Drängfläche zu erreichen und mit einer Kraft zu beaufschlagen.

Das Brillenelement ist bevorzugt aus Kunststoff gebildet, besonders bevorzugt durch ein Spritzgussverfahren, insbesondere als Spritzgussteil, oder mittels 3D-Druck oder Rapid Prototyping, hergestellt. Besonders bevorzugt weist das Brillenelement einen Kunststoff auf oder besteht aus einem Kunststoff, der ausgewählt ist aus einer Gruppe, bestehend aus: Polycarbonat, Nylon, TR90, und Acetat oder Celluloseacetat.

Vorzugsweise ist das Brillenelement als Brillenbügel ausgebildet.

Ebenfalls nicht zur Erfindung gehört eine Brille, mit einem erfindungsgemäßen Brillenelement oder einem Brillenelement nach einem der zuvor beschriebenen Ausführungsbeispiele. In Zusammenhang mit der Brille verwirklichen sich insbesondere die Vorteile, die in Zusammenhang mit dem Brillenelement und dem Scharnierteil erläutert wurden.

In bevorzugter Ausgestaltung weist die Brille das Brillenelement als Brillenbügel auf; insbesondere weist die Brille bevorzugt zwei solcher Brillenelemente als Brillenbügel auf. Darüber hinaus weist die Brille bevorzugt ein Mittelteil auf, an welchem die Brillenbügel mittels erfindungsgemäßer Scharnierteile oder Scharnierteile gemäß einer der zuvor beschriebenen bevorzugten Ausgestaltungen gelenkig angelenkt sind.

Unter einem Mittelteil der Brille wird hier ein Brillenelement verstanden, welches eingerichtet ist, um wenigstens ein Brillenglas, vorzugsweise zwei Brillengläser, zu tragen.

Das Mittelteil der Brille ist bevorzugt ebenfalls aus Kunststoff gebildet, insbesondere aus einem der zuvor genannten Kunststoffe.

Vorzugsweise ist die Brille als Sportbrille ausgebildet.

Die Aufgabe wird auch gelöst, indem ein Verfahren zum Anordnen eines Scharnierteils in einem Brillenelement geschaffen wird, welches folgende Schritte aufweist: Ein erfindungsgemäßes Scharnierteil oder ein Scharnierteil nach einem der zuvor beschriebenen Ausführungsbeispiele wird in eine zu einer Stirnseite hin offene Aufnahmeaussparung des Brillenelements eingebracht. Das Scharnierteil wird dabei in die Aufnahmeaussparung - in axialer Richtung - eingeschoben, bis das Bügelteil des Scharnierteils mit seinem Anschlag an der Stirnseite des Brillenelements anschlägt. Dabei wird das Bügelteil in seiner Montageposition angeordnet, und der Träger wird in einer - insbesondere ersten - Verankerungsposition angeordnet. Die Drängfläche des Trägers wird mit einer Kraft beaufschlagt, so dass der Träger weiter in die Aufnahmeaussparung hineingedrängt wird. Dabei wird die Verankerungsposition des Trägers relativ zu der Montageposition des Bügelteils verändert, insbesondere hin zu einer zweiten Verankerungsposition. Insbesondere wird auf diese Weise, das heißt durch Beaufschlagen der Drängfläche mit der Kraft und das weitere Hineindrängen des Trägers in die Aufnahmeaussparung, die Vorspannung des Federelements eingestellt. Besonders bevorzugt wird die Vorspannung des Federelements auf diese Weise auf einen vorbestimmten Vorspannungswert eingestellt oder nachjustiert, insbesondere nachgestellt. In Zusammenhang mit dem Verfahren verwirklichen sich insbesondere die Vorteile, die bereits in Zusammenhang mit dem Scharnierteil und dem Brillenelement erläutert wurden. Insbesondere ist es in einfacher, reproduzierbarer und präziser Weise möglich, die Vorspannung des Federelements einzustellen, insbesondere auch nachzustellen.

Gemäß der Erfindung ist vorgesehen, dass die Verankerungsposition relativ zu der Montageposition im Gebrauch des Brillenelements, insbesondere an einer das Brillenelement aufweisenden Brille, durch Beaufschlagen der Drängfläche mit einer Kraft verändert wird. Insbesondere wird auf diese Weise im Gebrauch des Brillenelements die Vorspannung des Federelements nachjustiert, vorzugsweise nachgestellt. Dabei wird insbesondere auch der Träger weiter in die Aufnahmeaussparung hineingedrängt.

Bevorzugt ist hierzu vorgesehen, dass die Aufnahmeaussparung in axialer Richtung eine Erstreckung aufweist, die größer ist als eine axiale Erstreckung, die nötig wäre, um den Träger in der ursprünglichen Verankerungsposition beim Herstellen des Brillenelements, das heißt insbesondere bei einem ersten Anordnen des Scharnierteils in dem Brillenelement, aufzunehmen. Auf diese Weise wird in der Aufnahmeaussparung Raum freigelassen, in den der Träger zu einem späteren Zeitpunkt im Gebrauch des Brillenelements hineingedrängt werden kann, um die Vorspannung des Federelements nachzujustieren, insbesondere um das Federelement nachzuspannen.

Es ist also insgesamt vorteilhaft möglich, die Vorspannung des Federelements auch nachträglich anzupassen, insbesondere das Federelement nachzuspannen, wenn dessen Vorspannung im Gebrauch des Brillenelements nachgelassen hat, oder wenn aus anderen Gründen eine größere Vorspannung erwünscht ist. Insbesondere kann durch eine stärkere Vorspannung des Federelements der Schnappeffekt des Federscharniers akkurater ausgestaltet und der Widerstand, den ein Brillenbügel gegen ein Überdehnen nach außen, über die Trageposition hinaus, aufweist, vergrößert werden.

Die Aufgabe wird schließlich auch gelöst, indem ein Verfahren zum Herstellen eines Scharnierteils geschaffen wird, welches folgende Schritte aufweist: Ein Bügelteil wird aus einem Blech herausgearbeitet, insbesondere gestanzt, lasergeschnitten, drahtgeschnitten oder drahterodiert. Ein Träger wird aus einem Blech herausgearbeitet, insbesondere gestanzt, lasergeschnitten, drahtgeschnitten oder drahterodiert. Das Bügelteil und ein Federelement werden auf dem Träger angeordnet. Der Träger wird in eine Träger-Endform gebogen, in der der Träger das Bügelteil und das Federelement umgreift. Das Bügelteil wird in eine Bügelteil-Endform gebogen. Mithilfe des Verfahrens ist ein Scharnierteil eines Federscharniers besonders einfach und kostengünstig herstellbar.

Die hier aufgeführten Schritte des Verfahrens zum Herstellen des Scharnierteils müssen nicht in der angegebenen Reihenfolge ausgeführt werden, sie können aber sehr wohl in der angegebenen Reihenfolge ausgeführt werden.

Es sind aber insbesondere von der zuvor ausgeführten Reihenfolge abweichende Reihenfolgen der Verfahrensschritte möglich. Insbesondere sind folgende weitere Ausgestaltungen des Verfahrens möglich:
In einer ersten bevorzugten weiteren Ausgestaltung wird zunächst das Bügelteil in die Bügelteil-Endform gebogen; sodann wird das Bügelteil in seiner Bügelteil-Endform mit dem Federelement auf dem Träger angeordnet; dann wird der Träger in seine Träger-Endform gebogen, in der er dann das Bügelteil und das Federelement umgreift.

Gemäß einer zweiten bevorzugten Ausgestaltung des Verfahrens wird das Bügelteil - vor dem Biegen - mit dem Federelement auf dem Träger angeordnet; sodann wird zunächst das Bügelteil in seine Bügelteil-Endform gebogen, während es bereits auf dem Träger angeordnet ist; erst danach wird schließlich der Träger in seine Träger-Endform gebogen, in der er das Bügelteil und das Federelement umgreift.

Weiter kommt es selbstverständlich nicht entscheidend darauf an, ob zuerst das Bügelteil oder zuerst der Träger aus einem Blech herausgearbeitet wird. Vielmehr ist es auch möglich, dass das Bügelteil und der Träger zeitgleich aus einem Blech, insbesondere sogar aus demselben Blech, herausgearbeitet werden.

Es ist auch deutlich geworden, dass das Bügelteil in seiner Bügelteil-Endform oder in noch nicht gebogener Form auf den Träger angeordnet werden kann.

Es ist auch möglich, dass der Träger zuerst in seine Träger-Endform gebogen wird, wobei danach das - noch nicht oder zumindest nicht vollständig in seine Bügelteil-Endform gebogene - Bügelteil und das Federelement in dem Träger angeordnet werden, wobei danach das Bügelteil in die Bügelteil-Endform gebogen oder fertiggebogen wird.

Selbstverständlich sind weitere Variationen der Reihenfolge der Verfahrensschritte möglich. Auch können ohne weiteres weitere, zusätzlich Teilschritte oder Verfahrensschritte hinzutreten, ohne dass das erfindungsgemäß bevorzugte Verfahren verlassen wird.

Die Erfindung wird im Folgenden anhand der Zeichnung näher erläutert. Dabei zeigen:
- Figur 1: eine Darstellung eines Ausführungsbeispiels eines Brillenelements in Kombination mit einem Ausführungsbeispiel eines Scharnierteils;
- Figur 2: eine Darstellung des Scharnierteils gemäß Figur 1;
- Figur 3: eine Darstellung eines Trägers des Scharnierteils gemäß Figur 2 in einer Träger-Endform;
- Figur 4: eine Darstellung eines Bügelteils des Scharnierteils gemäß Figur 2 in einer Bügelteil-Endform;
- Figur 5: eine Darstellung des Trägers gemäß Figur 3 vor dem Biegen in die Träger-Endform, und
- Figur 6: eine Darstellung des Bügelteils gemäß Figur 4 vor dem Biegen in die Bügelteil-Endform.

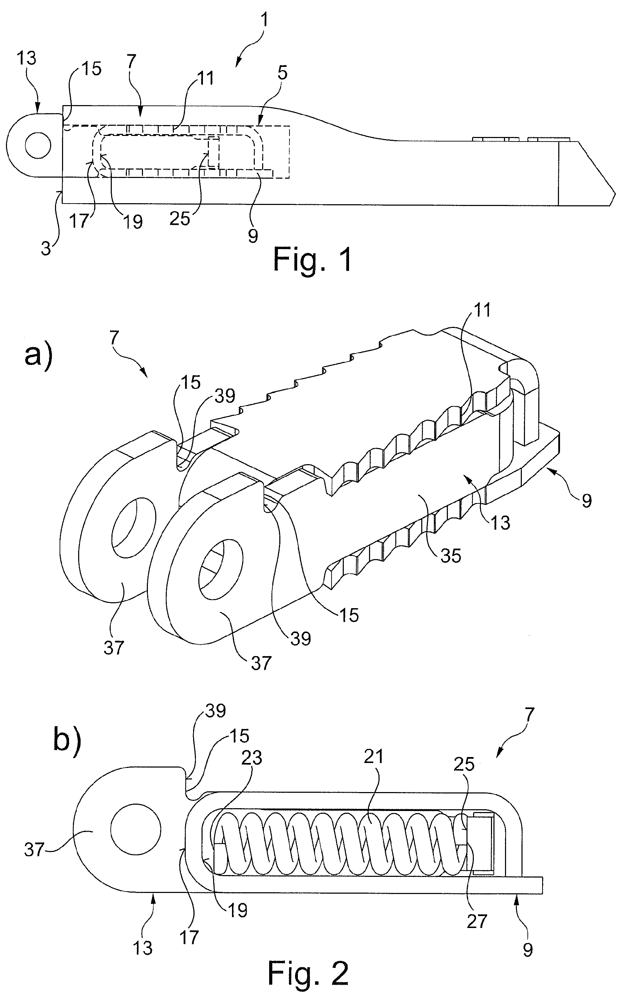

**Fig.** 1 zeigt ein Ausführungsbeispiel eines Brillenelements 1, das eine zu einer Stirnseite 3 hin offene Aufnahmeaussparung 5 aufweist. In der Aufnahmeaussparung 5 ist ein Ausführungsbeispiel eines Scharnierteils 7 angeordnet, das einen Träger 9 aufweist, der mit Verankerungselementen 11, von denen der besseren Übersichtlichkeit wegen nur eines mit einem Bezugszeichen bezeichnet ist, in der Aufnahmeaussparung 5 verankert ist. Ein Bügelteil 13 des Scharnierteils 7 liegt mit einem Anschlag 15 an der Stirnseite 3 an. Der Träger 9 weist eine Drängfläche 17 auf, die über die Stirnseite 3, insbesondere über eine stirnseitige Öffnung der Aufnahmeaussparung 5 her zugänglich ist.

Das Brillenelement 1 ist hier in bevorzugter Ausgestaltung als Brillenbügel ausgebildet.

**Fig. 2** zeigt eine Darstellung des Ausführungsbeispiels des Scharnierteils 7 gemäß Figur 1. Das Scharnierteil 7 ist insbesondere Teil eines hier nicht dargestellten Federscharniers einer ebenfalls nicht dargestellten Brille. Insbesondere kann es gelenkig mit einem weiteren Scharnierteil zu dem Federscharnier verbunden werden.

Insbesondere ist bei a) eine perspektivische Ansicht des Scharnierteils 7 dargestellt, wobei bei b) eine Längsschnittansicht dargestellt ist.

Der Träger 9 weist eine erste Stützfläche 19 auf. Von dem Träger 9 ist ein Federelement 21 aufgenommen, insbesondere ist das Federelement 21 in dem Träger 9 angeordnet. Das Federelement 21 liegt mit einem ersten Wirkende 23 an der ersten Stützfläche 19 an.

Das Bügelteil 13 ist in dem Träger 9 relativ zu dem Träger 9 verlagerbar angeordnet und weist eine zweite Stützfläche 25 auf, an der das Federelement 21 mit einem zweiten Wirkende 27 anliegt. Insbesondere wird das Federelement 21 zwischen der ersten Stützfläche 19 und der zweiten Stützfläche 25 gespannt, insbesondere zusammengedrückt, wenn das Bügelteil 13 in dem Träger 9 in Richtung einer Annäherung der beiden Stützflächen 19, 25 verlagert wird.

Das Federelement 21 ist insbesondere als Schraubenfeder ausgebildet.

In Figur 2 ist auch die Drängfläche 17 erkennbar, die von dem Bügelteil 13 freigestellt und somit insbesondere in an dem Brillenelement 1 montiertem Zustand des Scharnierteils 7 zugänglich ist.

Durch Beaufschlagen der Drängfläche 17 mit einer Kraft kann eine Verankerungsposition des Trägers 9 in der Aufnahmeaussparung 5 relativ zu der durch den Anschlag 15 an der Stirnseite 3 definierten Montageposition des Bügelteils 13 verändert werden. Insbesondere kann der Träger 9 weiter in die Aufnahmeaussparung 5 hineingedrängt werden, während das Bügelteil 13 durch den Anschlag 15, mit dem es an der Stirnseite 3 anschlägt, in seiner Position relativ zu dem Brillenelement 1 gehalten wird. Dabei wird eine Relativverlagerung zwischen der ersten Stützfläche 19 und der zweiten Stützfläche 25 derart bewirkt, dass diese Stützflächen 19, 25 einander angenähert werden, wodurch die Vorspannung des Federelements 21 eingestellt werden kann. Insbesondere kann die Vorspannung des Federelements 21 auf einen vorbestimmten Wert erhöht werden. Besonders bevorzugt kann sie auch im Gebrauch des Brillenelements 1 angepasst, insbesondere nachgestellt werden. Dies ist ganz besonders vorteilhaft, wenn die Vorspannkraft aufgrund von Verschleiß während des Gebrauchs des Brillenelements 1 nachgelassen hat.

Die Verankerungselemente 11 sind als Sägezahnprofil, insbesondere seitlich, an dem Träger 9 angeordnet.

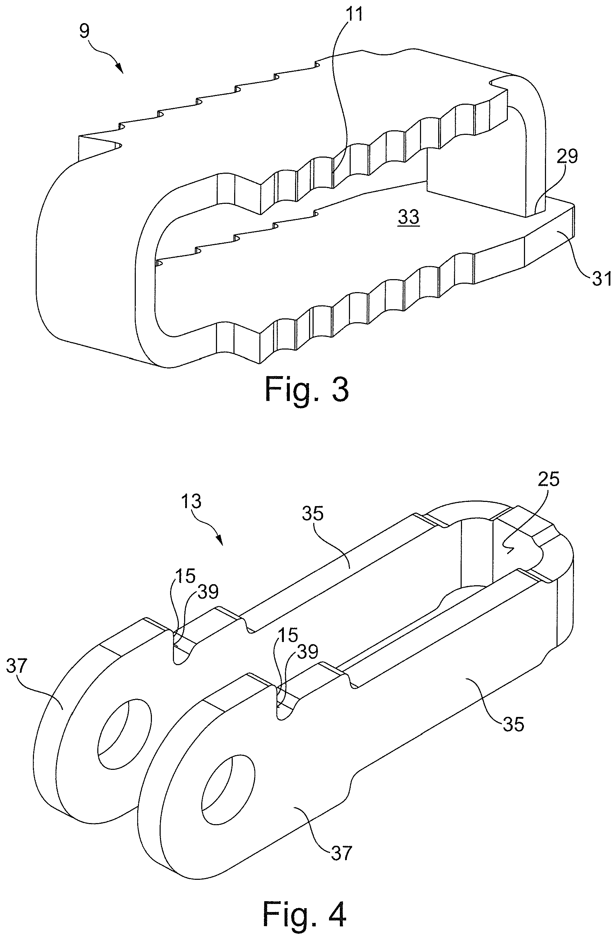

**Fig. 3** zeigt eine Darstellung des Trägers 9 des Scharnierteils 7. Gleiche und funktionsgleiche Elemente sind in allen Figuren mit gleichen Bezugszeichen versehen, sodass insofern jeweils auf die vorangegangene Beschreibung verwiesen wird.

Der Träger 9 ist als Blech-Biege-Teil, insbesondere aus einem dünnen Blech, hergestellt. Dabei ist insbesondere ein erstes Ende 29 auf ein zweites Ende 31 des Trägers 9 gebogen, wodurch ein von dem Träger 9 umschlungener Aufnahmeraum 33 gebildet ist, in dem in zusammengesetztem Zustand des Scharnierteils 7 das Bügelteil 13 - zumindest bereichsweise - und das Federelement 21 aufgenommen, insbesondere angeordnet, sind.

Das zweite Ende 31 ist vorzugsweise beidseitig angeschrägt, um ein leichtes Einführen des Trägers 9 in die Aufnahmeaussparung 5 des Brillenelements 1 zu ermöglichen.

Der Träger 9 ist in Figur 3 in einer Träger-Endform dargestellt.

**Fig. 4** zeigt eine Darstellung des Bügelteils 13 des Scharnierteils 7.

Das Bügelteil 13 ist als Blech-Biege-Teil, insbesondere aus einem dünnen Blech, ausgebildet.

Es weist insbesondere zwei Schenkel 35 auf, mit denen es in zusammengebautem Zustand des Scharnierteils 7 das Federelement 21 umgreift. Insbesondere ist das Bügelteil 13 U-förmig ausgebildet, wobei die beiden Schenkel 35 Schenkel des U sind. An jedem Schenkel 35 ist jeweils ein Scharnierauge 37 angeordnet.

Der Anschlag 15 ist bevorzugt durch Anschlagflächen 39 ausgebildet, wobei jeweils eine Anschlagfläche 39 an jedem der Scharnieraugen 37 ausgebildet oder angeordnet ist.

Insbesondere sind sowohl der Träger 9 als auch das Bügelteil 13 als Blech-Biege-Teile ausgebildet und - wie insbesondere in Figur 2 erkennbar - in ineinander verschlungener Konfiguration angeordnet.

Das Bügelteil 13 ist in Figur 4 in einer Bügelteil-Endform dargestellt.

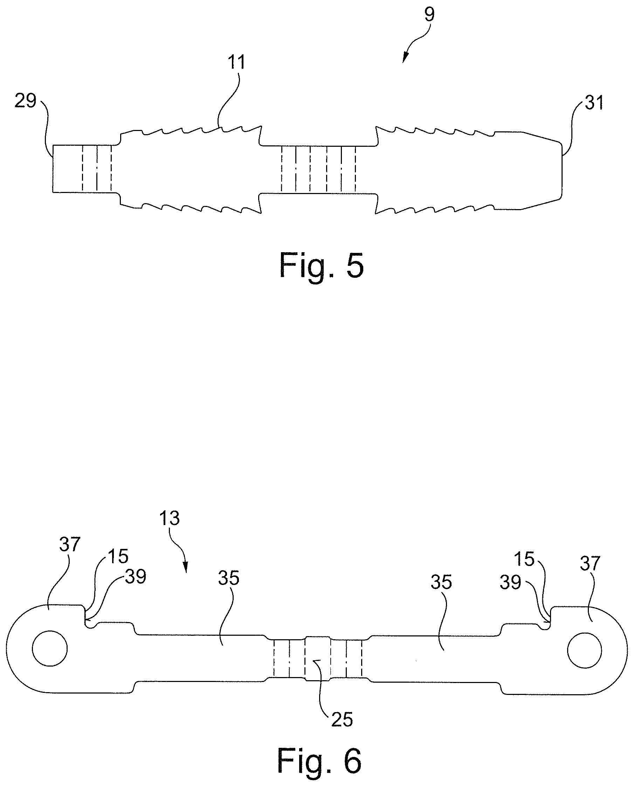

**Fig. 5** zeigt den Träger 9, nachdem er aus einem Blech herausgearbeitet, insbesondere gestanzt, lasergeschnitten, drahtgeschnitten oder drahterodiert wurde, und bevor er in die Träger-Endform gebogen wird. Dabei ist erkennbar, dass die Verankerungselemente 11, insbesondere als Sägezahnprofil, vorteilhaft bereits beim Herausarbeiten mit ausgebildet werden können.

**Fig. 6** zeigt das Bügelteil 13 nach dem Herausarbeiten, insbesondere Stanzen, Laserschneiden, Drahtschneiden oder Drahterodieren, aus einem Blech und vor dem Biegen in die Bügelteil-Endform. Vorteilhaft werden auch die Scharnieraugen 37 einschließlich der Anschlagflächen 39 bereits beim Herausarbeiten mit ausgebildet.

Ein Verfahren zum Herstellen des Scharnierteils 7 sieht bevorzugt vor, dass das Bügelteil 13 aus einem Blech herausgearbeitet, insbesondere gestanzt, lasergeschnitten, drahtgeschnitten oder drahterodiert wird. Auch der Träger 9 wird aus einem Blech herausgearbeitet, insbesondere gestanzt, lasergeschnitten, drahtgeschnitten oder drahterodiert. Das Bügelteil 13 und das Federelement 21 werden auf dem Träger 9 angeordnet. Der Träger 9 wird in die Träger-Endform gebogen, in der er das Bügelteil 13 und das Federelement 21 umgreift. Das Bügelteil 13 wird in seine Bügelteil-Endform gebogen. Dabei können die genannten Verfahrensschritte durchaus in abweichender Reihenfolge durchgeführt werden.

Insbesondere ist es möglich, dass das Bügelteil 13 bereits in der Bügelteil-Endform auf dem Träger 9 angeordnet wird.

Alternativ ist es auch möglich, dass das Bügelteil 13 erst nach dem Anordnen auf dem Träger 9 jedoch vor dem Biegen des Trägers 9 in die Träger-Endform in seine Bügelteil-Endform gebogen wird.

Auch ist es möglich, dass zunächst der Träger 9 in seine Träger-Endform gebogen wird, wobei dann das Bügelteil 13 in noch nicht oder noch nicht vollständig in die Bügelteil-Endform gebogene Form gemeinsam mit dem Federelement 21 in dem Aufnahmeraum 33 angeordnet wird. Erst danach wird dann das Bügelteil 13 in die Bügelteil-Endform gebogen oder fertiggebogen.

Im Rahmen eines Verfahrens zum Anordnen des Scharnierteils 7 in dem Brillenelement 1 wird bevorzugt das Scharnierteil 7 in die Aufnahmeaussparung 5 eingeschoben, insbesondere eingepresst, bis das Bügelteil 13 mit dem Anschlag 15 an der Stirnseite 3 anschlägt. Dabei wird das Bügelteil 13 in der Montageposition angeordnet, und der Träger 9 wird in einer ersten Verankerungsposition angeordnet. Danach wird die Drängfläche 17 mit einer Kraft beaufschlagt, sodass der Träger 9 weiter in die Aufnahmeaussparung 5 hineingedrängt wird. Dabei wird die Verankerungsposition relativ zu der Montageposition verändert, insbesondere hin zu einer zweiten Verankerungsposition. Vorteilhaft wird dabei die Vorspannung des Federelements 21 eingestellt.

Bevorzugt wird die Verankerungsposition relativ zu der Montageposition im Gebrauch des Brillenelements 1, insbesondere an einer Brille, durch Beaufschlagen der Drängfläche 17 mit einer Kraft verändert. Insbesondere wird auf diese Weise die Vorspannung des Federelements 21 nachgestellt oder nachjustiert. Insbesondere wird dabei der Träger 9 bei festgehaltener Montageposition des Bügelteils 13 an dem Brillenelement 1 weiter in die Aufnahmeaussparung 5 hineingedrängt.

Die Verankerungselemente 11 verhindern dabei jeweils, dass der Träger 9 sich zurück in Richtung der Stirnseite 3 verlagern kann.

## Patentansprüche

1. Scharnierteil (7) für ein Federscharnier einer Brille, mit
- einem Träger (9), der eine erste Stützfläche (19) aufweist, wobei
- ein Federelement (21) von dem Träger (9) aufgenommen ist, das mit einem ersten Wirkende (23) an der ersten Stützfläche (19) anliegt, wobei
- der Träger (9) Verankerungselemente (11) zur Verankerung des Trägers (9) in einem Brillenelement (1) in einer Verankerungsposition aufweist, und mit
- einem Bügelteil (13), das in dem Träger (9) relativ zu dem Träger (9) verlagerbar angeordnet ist und eine zweite Stützfläche (25) aufweist, an der das Federelement (21) mit einem zweiten Wirkende (27) anliegt, wobei
- das Bügelteil (13) einen Anschlag (15) aufweist, der eingerichtet ist, um in einer Montageposition des Bügelteils (13) an dem Brillenelement (1) anzuschlagen, und wobei
- der Träger (9) eine von dem Bügelteil (13) freigestellte Drängfläche (17) aufweist, die derart angeordnet ist, dass
- die Verankerungsposition relativ zu der Montageposition durch Beaufschlagen der Drängfläche (17) mit einer Kraft verändert werden kann, **dadurch gekennzeichnet, dass** der Träger (9) als Blech-Biege-Teil ausgebildet ist.

2. Scharnierteil (7) nach Anspruch 1, **dadurch gekennzeichnet, dass** das Bügelteil (13) als Blech-Biege-Teil ausgebildet ist.

3. Scharnierteil (7) nach einem der vorhergehenden Ansprüche, **dadurch gekennzeichnet, dass** das Bügelteil (13) das Federelement (21) mit zwei Schenkeln (35) umgreift, wobei an jedem Schenkel (35) der beiden Schenkel (35) jeweils ein Scharnierauge (37) angeordnet ist.

4. Scharnierteil (7) nach einem der vorhergehenden Ansprüche, **dadurch gekennzeichnet, dass** der Träger (9) und das Bügelteil (13) als Blech-Biege-Teile ausgebildet und in ineinander verschlungener Konfiguration angeordnet sind.

5. Scharnierteil (7) nach einem der vorhergehenden Ansprüche, **dadurch gekennzeichnet, dass** die Verankerungselemente (11) als Sägezahnprofil an dem Träger (9) angeordnet, insbesondere ausgebildet sind.

6. Brillenelement (1), mit einer zu einer Stirnseite (3) hin offenen Aufnahmeaussparung (5), wobei
- in der Aufnahmeaussparung (5) ein Scharnierteil (7) nach einem der Ansprüche 1 bis 5 angeordnet ist, wobei
- der Träger (9) des Scharnierteils (7) mit den Verankerungselementen (11) in der Aufnahmeaussparung (5) verankert ist, wobei
- das Bügelteil (13) mit dem Anschlag (15) an der Stirnseite (3) anliegt, und wobei
- die Drängfläche (17) über die Stirnseite (3) zugänglich ist.

7. Verfahren zum Anordnen eines Scharnierteils (7) in einem Brillenelement (1), mit folgenden Schritten:
- Einbringen eines Scharnierteils (7) nach einem der Ansprüche 1 bis 5 in eine zu einer Stirnseite (3) hin offene Aufnahmeaussparung (5) des Brillenelements (1), wobei
- das Scharnierteil (7) in die Aufnahmeaussparung (5) eingeschoben wird, bis das Bügelteil (13) des Scharnierteils (7) mit seinem Anschlag (15) an der Stirnseite (3) anschlägt, und wobei das Bügelteil (13) in seiner Montageposition und der Träger (9) in einer Verankerungsposition angeordnet werden;
- Beaufschlagen der Drängfläche (17) des Trägers (9) mit einer Kraft, sodass der Träger (9) weiter in die Aufnahmeaussparung (5) hineingedrängt wird, wobei
- die Verankerungsposition des Trägers (9) relativ zu der Montageposition des Bügelteils (13) verändert wird.

8. Verfahren nach Anspruch 7, **dadurch gekennzeichnet, dass** die Verankerungsposition relativ zu der Montageposition im Gebrauch des Brillenelements (1) durch Beaufschlagen der Drängfläche (17) mit einer Kraft verändert wird, um das Federelement (21) nachzujustieren.

9. Verfahren zum Herstellen eines Scharnierteils (7) nach einem der Ansprüche 1 bis 5 mit folgenden Schritten:
- Herausarbeiten eines Bügelteils (13) aus einem Blech;
- Herausarbeiten eines Trägers (9) aus einem Blech;
- Anordnen des Bügelteils (13) und eines Federelements (21) auf dem Träger (9);
- Biegen des Trägers (9) in eine Träger-Endform, in der der Träger (9) das Bügelteil (13) und das Federelement (21) umgreift, und
- Biegen des Bügelteils (13) in eine Bügelteil-Endform.

## Claims

1. Hinge part (7) for a spring hinge of spectacles, comprising
- a carrier (9) having a first support surface (19), wherein
- a spring element (21) is received by the carrier (9), which rests with a first effecting end (23) on the first support surface (19), wherein
- the carrier (9) has anchoring elements (11) for anchoring the carrier (9) in a spectacles element (1) in an anchoring position, and with
- a temple part (13) which is arranged to be displaceable relative to the carrier (9) in the carrier (9) and has a second support surface (25) against which the spring element (21) rests with a second effecting end (27), wherein
- the temple part (13) has a stop (15) which is designed to abut against the spectacles element (1) in a mounting position of the temple part (13), and wherein
- the carrier (9) has an urge surface (17) that is not covered by the temple part (13) and is arranged in such a way that
- the anchoring position relative to the mounting position can be changed by applying a force to the urge surface (17), **characterised in that** the carrier (9) is designed as a sheet metal bending part.

2. Hinge part (7) according to claim 1, **characterised in that** the temple part (13) is designed as a sheet metal bending part.

3. Hinge part (7) according to one of the preceding claims, **characterised in that** the temple part (13) surrounds the spring element (21) with two legs (35), wherein a hinge eye (37) is arranged on each of the two legs (35).

4. Hinge part (7) according to one of the preceding claims, **characterised in that** the carrier (9) and the temple part (13) are designed as sheet metal bending parts and are arranged in an interlocking configuration.

5. Hinge part (7) according to one of the preceding claims, **characterised in that** the anchoring elements (11) are arranged, in particular are formed, on the carrier (9) as a saw tooth tread design.

6. Spectacles element (1) with a receptacle recess (5) open towards the front face (3), wherein
- a hinge part (7) according to one of claims 1 to 5 is arranged in the receptacle recess (5), wherein
- the carrier (9) of the hinge part (7) is anchored in the receptacle recess (5) with the anchoring elements (11), wherein
- the temple part (13) rests against the stop (15) on the front face (3), and wherein
- the urge surface (17) is accessible via the front face (3).

7. Method for arranging a hinge part (7) in a spectacles element (1), comprising the following steps:
- Inserting a hinge part (7) according to one of claims 1 to 5 into a receptacle recess (5) of the spectacles element (1) which is open towards the front face (3), wherein
- the hinge part (7) is inserted into the receptacle recess (5) until the temple part (13) of the hinge part (7) abuts against the front face (3) with its stop (15), and wherein the temple part (13) is arranged in its mounting position and the carrier (9) ) is arranged in an anchoring position;
- Appling a force to the urge surface (17) of the carrier (9) so that the carrier (9) is pushed further into the receptacle recess (5), wherein
- the anchoring position of the carrier (9) is changed relative to the mounting position of the temple part (13).

8. Method according to claim 7, **characterised in that** the anchoring position relative to the mounting position is changed during use of the spectacles element (1) by applying a force to the urge surface (17) in order to readjust the spring element (21).

9. Method for manufacturing a hinge part (7) according to one of claims 1 to 5, comprising the following steps:
- Carving out a temple part (13) from a sheet metal;
- Carving out a carrier (9) from a sheet metal;
- Arranging the temple part (13) and a spring element (21) on the carrier (9);
- Bending the carrier (9) into a final carrier shape in which the carrier (9) surrounds the temple part (13) and the spring element (21), and
- Bending the temple part (13) into a final temple part shape.

## Revendications

1. Pièce de charnière (7) pour une charnière à ressort d'une monture de lunettes, ayant :
- un support (9) présentant une première surface de support (19), dans laquelle
- un élément de ressort (21) est reçu par le support (9) et repose avec une première extrémité d'action (23) sur la première surface de support (19), dans laquelle
- le support (9) présente des éléments d'ancrage (11) pour l'ancrage du support (9) dans un élément de lunettes (1) dans une position d'ancrage, et avec
- une pièce de branche (13) qui est disposée dans le support (9) de manière déplaçable par rapport au support (9) et présente une deuxième surface de support (25) sur laquelle l'élément de ressort (21) repose avec une deuxième extrémité d'action (27), dans laquelle
- la pièce de branche (13) présente une butée (15) qui est agencée pour buter contre l'élément de lunettes (1) dans une position de montage de la pièce de branche (13), et dans laquelle
- le support (9) présente une surface de poussée (17), dégagée de la pièce de branche (13), qui est disposée de telle sorte que
- la position d'ancrage peut être modifiée par rapport à la position de montage en exerçant une force sur la surface de poussée (17), **caractérisé en ce que** le support (9) est formé comme une pièce pliée en tôle.

2. Pièce de charnière (7) selon la revendication 1, **caractérisée en ce que** la pièce de branche (13) est formée comme une pièce pliée en tôle.

3. Pièce de charnière (7) selon l'une des revendications précédentes, **caractérisée en ce que** la pièce de branche (13) entoure l'élément de ressort (21) avec deux branches (35), dans laquelle un œillet de charnière (37) est disposé sur chaque branche (35) des deux branches (35).

4. Pièce de charnière (7) selon l'une des revendications précédentes, **caractérisée en ce que** le support (9) et la pièce de branche (13) sont formés comme des pièces pliées en tôle et disposés dans une configuration entrelacée.

5. Pièce de charnière (7) selon l'une des revendications précédentes, **caractérisée en ce que** les éléments d'ancrage (11) sont disposés, en particulier formés, comme un profil en dents de scie sur le support (9).

6. Élément de lunettes (1), ayant un évidement de réception (5) ouvert vers un côté frontal (3), dans lequel
- une pièce de charnière (7) selon l'une des revendications 1 à 5 est disposée dans l'évidement de réception (5), dans lequel
- le support (9) de la pièce de charnière (7) est ancré dans l'évidement de réception (5) avec les éléments d'ancrage (11), dans lequel
- la pièce de branche (13) repose sur le côté frontal (3) avec la butée (15), et dans lequel
- la surface de poussée (17) est accessible via le côté frontal (3).

7. Procédé pour disposer une pièce de charnière (7) dans un élément de lunettes (1), ayant les étapes suivantes :
- introduction d'une pièce de charnière (7) selon l'une des revendications 1 à 5 dans un évidement de réception (5) ouvert vers un côté frontal (3) de l'élément de lunettes (1), dans lequel
- la pièce de charnière (7) est insérée dans l'évidement de réception (5) jusqu'à ce que la pièce de branche (13) de la pièce de charnière (7) bute contre le côté frontal (3) avec sa butée (15), et dans lequel la pièce de branche (13) est disposée dans sa position de montage et le support (9) est disposé dans une position d'ancrage ;
- exercer une force sur la surface de poussée (17) du support (9) de sorte que le support (9) soit davantage enfoncé dans l'évidement de réception (5), dans lequel
- la position d'ancrage du support (9) est modifiée par rapport à la position de montage de la pièce de branche (13).

8. Procédé selon la revendication 7, **caractérisé en ce que** la position d'ancrage est modifiée par rapport à la position de montage lors de l'utilisation de l'élément de lunettes (1) en exerçant une force sur la surface de poussée (17) pour ajuster l'élément de ressort (21).

9. Procédé pour fabriquer une pièce de charnière (7) selon l'une des revendications 1 à 5 ayant les étapes suivantes :
- usinage d'une pièce de branche (13) à partir d'une tôle ;
- usinage d'un support (9) à partir d'une tôle ;
- disposition de la pièce de branche (13) et d'un élément de ressort (21) sur le support (9) ;
- pliage du support (9) en une forme finale de support, dans lequel le support (9) entoure la pièce de branche (13) et l'élément de ressort (21), et
- pliage de la pièce de branche (13) en une forme finale de pièce de branche.
